# EUROPEAN PATENT SPECIFICATION

(11) **EP 3 875 352 B1**
(45) Date of publication and mention of the grant of the patent: **18.02.2026**
(21) Application number: 20205413.6
(22) Date of filing: 03.11.2020
(51) Int. Cl.: B62D 49/06, A01D 34/64, A01D 67/00, E02F 9/18

(54) **WORK VEHICLE AND COUNTER WEIGHT FOR WORK VEHICLE**
ARBEITSFAHRZEUG UND GEGENGEWICHT FÜR EIN ARBEITSFAHRZEUG
VÉHICULE DE TRAVAIL ET CONTREPOIDS POUR VÉHICULE DE TRAVAIL

(30) Priority: 05.03.2020 JP 2020037815
(43) Date of publication of application: 08.09.2021
(73) Proprietor: Kubota Corporation, Osaka-shi, Osaka 556-8601 (JP)
(72) Inventor: ONO, Kohei, SAKAI-SHI, OSAKA, 5900823 (JP)
(74) Representative: Cabinet Beau de Loménie

(56) References cited:
- CN-U- 201 981 569
- FR-A- 1 518 091
- FR-A- 1 529 278
- GB-A- 2 457 248
- US-A- 5 255 931

## Description

### TECHNICAL FIELD

The present invention relates to a counter weight to be attached to a vehicle body of a work vehicle and to a work vehicle comprising such counter weight.

### RELATED ART

Conventionally, when a work vehicle is to be fastened to a load carrying deck of a transporter vehicle such as a truck, a rope or the like will be retained to a vehicle body of the work vehicle and to a hook (corresponding to a "connected portion" in the present invention) provided in the vehicle body (e.g. Japanese Unexamined Patent Application Publication No. 2019-146529 (see paragraphs [0167] through [0170] and [Fig. 11] thereof).

FR1518091 discloses a work vehicle with a counterweight attached to the vehicle body.

GB2457248 discloses a tractor counterweight assembly.

CN201981569U discloses a counterweight for an excavator.

### SUMMARY

### PROBLEM TO BE SOLVED BY INVENTION

However, with the conventional technique, the hook provided in the work vehicle would be constituted of a narrow elongate member and provided at a low position. This made it difficult for a worker to locate the hook and an operation of hooking the rope or the like to the hook was difficult also.

Then, in view of the above, the object of the present invention is to provide a counter weight for a work vehicle and a work vehicle having such counter weight configured such that a place for retaining a fastening member is easy to locate for a worker and an operation of fastening onto the load carrying deck of the transporter vehicle is easy.

A counter weight according to the present invention is defined in claim 1 and a work vehicle having such counter weight according to the invention is defined in claim 3.

With the present invention described above, the fastening member for fastening the work vehicle on the load carrying deck of a transporter vehicle is to be retained by the counter weight. The counter weight has a predetermined weight; thus, when attached to the work vehicle, the counter weight achieves an effect of improving weight balance of the work vehicle as a whole mounting a utility implement. As the counter weight having the predetermined weight has a larger size than the hook or the like which is constituted of a narrow elongate member, the counter weight can be easily located by a worker. Moreover, since a retention portion (or a portion to be retained) is provided in the counter weight, the operation of causing the retention portion to retain the fastening member can be carried out easily.

In the present invention, preferably, the retention portion has a ground height higher than one of the axle of the front wheels and the axle of the rear wheels which one axle is closer to the retention portion.

With the present invention described above, the retention portion is provided at a position higher than the axle of the rear wheels, namely, at a position having a predetermined ground height. As a result, a worker can locate the retention portion easily. Moreover, when the fastening member is to be attached to the retention portion, the worker can carry out this attaching operation without being forced to assume an awkward and uncomfortable posture.

In the present invention, the retention portion is provided on each of left and right sides of the main body portion in a left/right direction of the vehicle body.

With the present invention described above, it is possible to have the fastening member retained to either one or both of the retention portions provided on the left and right sides. If the fastening members are retained to the left and right retention portions respectively, compared with the case of having the fastening member retained on one side alone, the work vehicle can be fastened in a more favorable manner. Further, for instance, in case the fastening member can be fastened on only either one of the left and right sides of the vehicle body due to restriction imposed by a certain specific feature of the load carrying deck of the transporter vehicle, the work vehicle can still be fastened by attaching the fastening member to the retention portion of either left or right side.

In the present invention, the retention portion includes a first portion which protrudes laterally from the main body portion, a second portion which protrudes laterally from the main body portion at a position away from the first portion, and a third portion provided between the first portion and the second portion and away from the main body portion.

With the present invention described above, the retention portion includes three portions as a first portion, a second portion and a third portion, to whichever portion the fastening member can be retained. Then, the fastening member can be retained to the retention portion in a favorable manner, in case the fastening member is to be disposed to extend to the retention portion in the front/rear direction of the work vehicle or in case the fastening member is routed taut to the retention portion from the lateral side of the work vehicle, etc.

In the present invention, preferably, the first portion is disposed on farther side from the front/rear center portion of the vehicle body than the second portion and has a lower ground height than the second portion.

When the retention portion is disposed adjacent the front wheels and the rear wheels, the fastening member may come into contact with the front wheels and the rear wheels inadvertently. On the other hand, if the counter weight is disposed at a high position in order to secure sufficient distances between the retention portion and the front and rear wheels, the counter weight may block partially the driver's view at the time of driving while carrying out a utility work. With the inventive feature described above, the retention portion is to have an inclination corresponding to a front upper side portion of the circumference of the front wheel or a rear upper side portion of the circumference of the rear wheel. Thus, it becomes possible to secure a certain distance between the retention portion and the front/rear wheels as seen in a side view. With this feature, even when the fastening member is routed taut to the retention portion laterally of the work vehicle and the fastening member is retained to the third portion, it becomes readily possible to avoid the inconvenience of the front wheels or rear wheels coming into contact with the fastening member inadvertently.

Moreover, since the retention portion has an inclination, when the fastening member is to be inserted to the retention portion, this inserting operation can be carried out not only in the vertical direction, but also in the front/rear direction. Therefore, the operation of causing the fastening member to be retained to the retention portion can be carried out easily.

In the present invention, preferably, an implement is coupled to either one of a front side portion and a rear side portion of the vehicle body, and the counter weight is attached to the other one thereof.

With the invention described above, with provision of the counter weight, the weight balance of the entire work vehicle having the implement is improved and the fastening member can be retained to the retention portion under this condition of improved weight balance, so that the work vehicle can be fastened in an even more favorable manner.

With the present invention described above, the fastening member for fastening the work vehicle on a load carrying deck of a transporter vehicle is to be retained by the counter weight. The counter weight has a predetermined weight; thus, when attached to the work vehicle, the counter weight achieves an effect of improving weight balance of the work vehicle as a hole mounting a utility implement. As the counter weight having the predetermined weight has a larger size than a hook or the like which is constituted of a narrow elongate member, the counter weight can be easily found by a worker. Moreover, since a retention portion is provided in the counter weight, the operation of causing the retention portion to retain the fastening member can be carried out easily.

In the present invention, when the main body portion is attached to a front side portion or a rear side portion of the vehicle body, the retention portion is provided on each of left and right sides of the main body portion in a left/right direction of the vehicle body.

With the present invention described above, it is possible to have the fastening member retained to either one or both of the retention portions provided on the left and right sides. If the fastening members are retained to the left and right retention portions respectively, compared with the case of having the fastening member retained on one side alone, the work vehicle can be fastened in a more favorable manner. Further, for instance, in case the fastening member can be fastened on only either one of the left and right sides of the vehicle body due to restriction imposed by a certain specific feature of the load carrying deck of the transporter vehicle, the work vehicle can still be fastened by attaching the fastening member to the retention portion of either left or right side.

In the present invention, the retention portion on the left and right side respectively includes a first portion which protrudes laterally from the main body portion, a second portion which protrudes laterally from the main body portion at a position away from the first portion, and a third portion provided between the first portion and the second portion and away from the main body portion.

With the present invention described above, the retention portion includes three portions as a first portion, a second portion and a third portion, to whichever portion the fastening member can be retained. Then, the fastening member can be retained to the retention portion in a favorable manner, in case the fastening member is to be routed taut to the retention portion in the front/rear direction of the work vehicle or in case the fastening member is routed taut to the retention portion from the lateral side of the work vehicle, etc.

In the present invention, preferably, the first portion is disposed on farther side from the front/rear center portion of the vehicle body than the second portion and has a lower ground height than the second portion.

When the retention portion is disposed adjacent the front wheels and the rear wheels, the fastening member may come into contact with the front wheels and the rear wheels inadvertently. On the other hand, if the counter weight is disposed at a high position in order to ensure sufficient distances between the retention portion and the front and rear wheels, the counter weight may block partially the driver's view at the time of driving while carrying out a utility work. With the inventive feature described above, the retention portion is to have an inclination corresponding to a front upper side portion of the circumference of the front wheel or a rear upper side portion of the circumference of the rear wheel. Thus, it becomes possible to secure a certain distance between the retention portion and the front/rear wheels as seen in a side view. With this feature, even when the fastening member is routed taut to the retention portion laterally of the work vehicle and the fastening member is retained to the third portion, it becomes readily possible to avoid the inconvenience of the front wheels or rear wheels coming into contact with the fastening member inadvertently.

Moreover, since the retention portion has an inclination, when the fastening member is to be inserted to the retention portion, this inserting operation can be carried out not only in the vertical direction, but also in the front/rear direction. Therefore, the operation of causing the fastening member to be retained to the retention portion can be carried out easily.

### BRIEF DESCRIPTION OF THE DRAWINGS

Fig.1 is a plan view showing a front mount type riding mower entirely,
Fig. 2 is a right side view showing the front mount type riding mower entirely,
Fig. 3 is a rear view showing a counter weight, and
Fig. 4 is a right side view showing the counter weight.

### EMBODIMENT

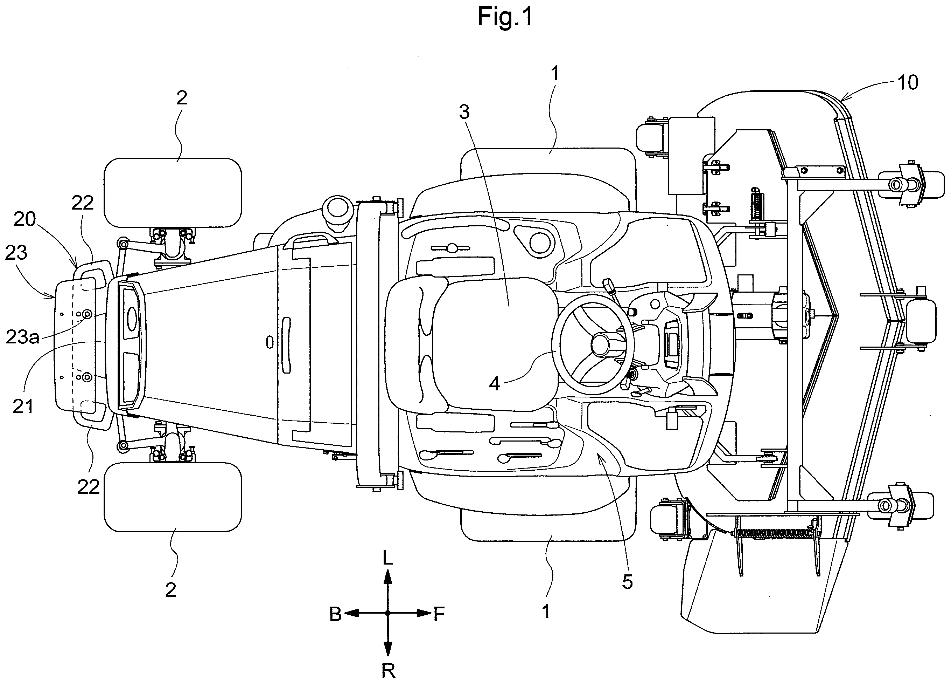

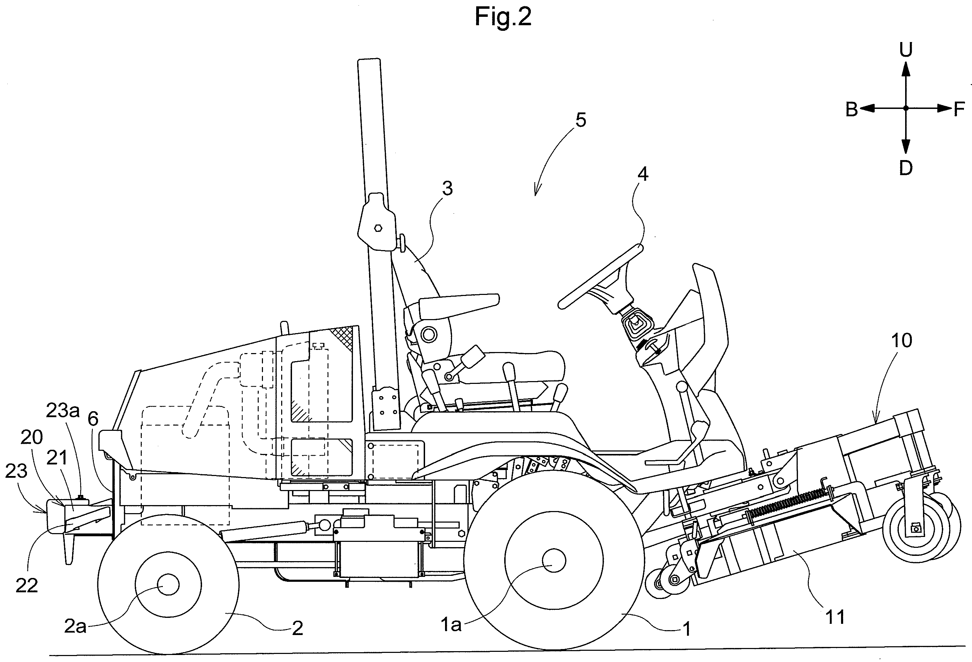

Next, with reference to the accompanying drawings, there will be explained a case wherein an embodiment as an example of the present invention is applied to a front mount type riding mower as an example of a work vehicle. Incidentally, in the following explanation, respecting a vehicle body of the front mount type riding mower, a direction of arrow F shown in Figs. 1 and 2 is defined as "vehicle body front side", a direction of arrow B shown in Figs. 1 and 2 is defined as "vehicle body rear side", a direction of arrow L shown in Fig. 1 is defined as "vehicle body left side" and a direction of arrow R shown in Fig. 1 is defined as "vehicle body right side", a direction of arrow U shown in Fig. 2 is defined as "vehicle body upper side" and a direction of arrow D shown in Fig. 2 is defined as "vehicle body lower side", respectively.

### [General Configuration of Front Mount Type Riding Mower]

As shown in Fig. 1, the front mount type riding mower includes left and right front wheels 1 provided on the front side of the vehicle body to be drivable, left and right rear wheels 2 provided on the rear side of the vehicle body to be steerable and the mower includes also, upwardly of the front wheels 1, a riding type driving section 5 having a driver's seat 3 and a steering wheel 4 for steering the rear wheels 2. Further, at a front side portion of the vehicle body, there is provided a mower device 10 as a utility implement and at a rear side end portion of the vehicle body, there is provided a counter weight 20.

### [Arrangement of Mower]

As shown in Figs. 1 and 2, the mower device 10 includes a cutter blade housing 11. Inside this cutter blade housing 11, there are mounted three cutter blades (not shown) juxtaposed along a vehicle body lateral width direction. Each one of these three cutter blades has a rotation support shaft (not shown) extending along the vertical direction of the vehicle body and the cutter blade is rotatably supported to an upper portion of the cutter blade housing 11 via the rotation support shaft.

### [Arrangement of Counter Weight]

As shown in Fig. 1 and Fig. 2, the counter weight 20 is attached to a portion which is the center portion in the vehicle body width direction of the vehicle body and which also is a rear end portion of the vehicle body on more rear side than an axle 2a of the rear wheels 2. The counter weight 20 has a lateral width which is narrower than the spacing between the left and right rear wheels 2, so as to avoid interference between the rear wheels 2 and the counter weight 20 when the rear wheels 2 are steered.

The counter weight 20 includes a main body portion 21 to be attached to the vehicle body and retention portions 22 to which a fastening member (not shown) such as a rope is to be retained at time of fastening on a load carrying deck of a transporter vehicle (not shown).

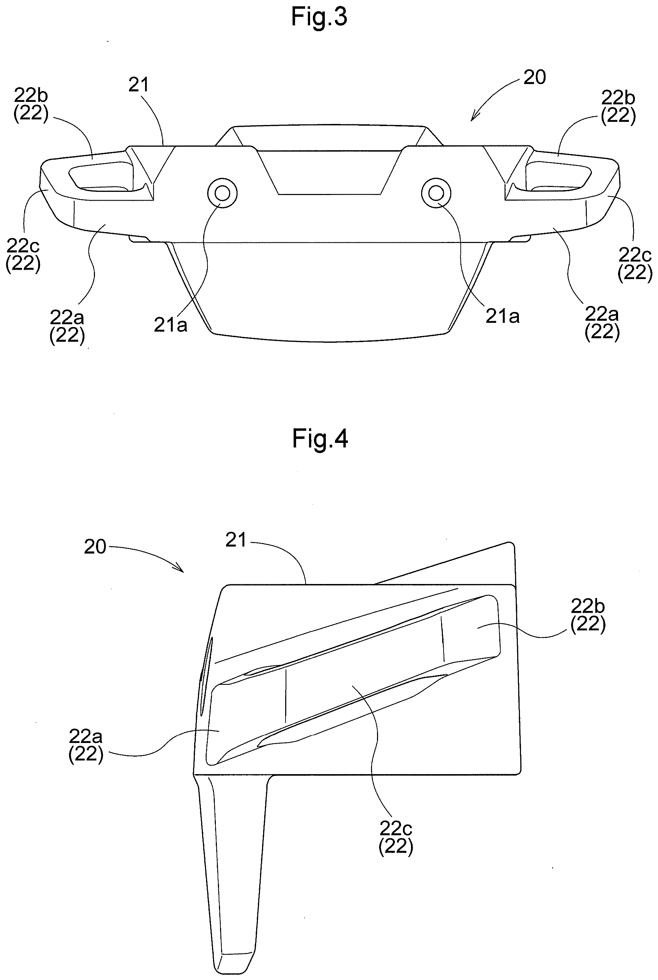

As shown in Fig. 3, the main body portion 21 defines two fastening through holes 21a in which bolts (not shown) can be inserted. As shown in Fig. 2, at a rear end portion of the vehicle body, there is provided a fastening portion 6 for fastening the counter weight 20.

The fastening portion 6 defines bolt holes (not shown) for fastening the bolts at positions corresponding to the fastening through holes 21a of the main body portion 21. As the main body portion 21 and the fastening portion 6 are bolt-fastened to each other, the counter weight 20 can be attached to the rear end portion of the vehicle body. As the counter weight 20 and the main body portion 21 are firmly fastened with each other via the bolts, the work vehicle can be fastened in a favorable manner by causing the fastening member to be retained to the retention portions 22 on e.g. a load carrying deck of the transporter vehicle.

As shown in Figs. 1 and 3, the retention portions 22 are provided respectively at the left and right side portions of the main body portion 21 in the vehicle body left/right direction. As shown in Fig. 3, each one of the retention portions 22 on the left and right sides includes a first portion 22a which protrudes laterally from a rear side portion of the left/right side portion of the main body portion 21, a second portion 22b which protrudes laterally from a front side portion of the left/right side portion of the main body portion 21 and a third portion 22c which is provided between a left/right outer end portion of the first portion 22a and a left/right outer end portion of the second portion 22b.

The first portion 22a is disposed on the side farther from the front/rear center portion of the vehicle body than the second portion 22b, and the first portion 22a and the second portion 22b are provided at positions distant from each other. As seen in the plan view, the retention portion 22 has an approximately U-shape formed of the first portion 22a, the second portion 22b and the third portion 22c.

Most of the retention portion 22 is arranged to be located on the lateral outer side in the vehicle body width direction relative to the left/right opposed end portions of the vehicle body rear end portion where the fastening portion 6 is provided. With this arrangement, to whichever of the first portion 22a, the second portion 22b, and the third portion 22c of the retention portion 22 the fastening member may be caused to be retained, interference between the fastening member and the vehicle body can be suppressed effectively.

As shown in Fig. 2 and Fig. 4, the retention portion 22 as a whole is arranged to be disposed at a ground height (ground clearance) position higher than the axle 2a of the rear wheel 2. This arrangement makes it easier for a worker to locate the retention portion 22 and also the arrangement does not force an awkward and uncomfortable posture for the worker when he/she tries to attach the fastening member to the retention portion 22, so that the attaching operation may be carried out easily.

When the retention portion 22 is disposed adjacent the front wheels 1 and the rear wheels 2, the fastening member may come into contact with the front wheels 1 and the rear wheels 2 inadvertently. On the other hand, if the counter weight 20 is disposed at a high position in order to secure sufficient distances between the retention portion 22 and the front and rear wheels 1, 2, this counter weight 20 may block partially the driver's view at the time of driving while carrying out a utility work. Then, there is provided the arrangement that the first portion 22a is disposed at a ground height lower than the second portion 22b. With this, as shown in Fig. 2, the retention portion 22 is to have an inclination corresponding to rear upper side portion of the circumference of the rear wheel 2. Thus, it becomes possible to secure a certain distance between the retention portion 22 and the rear wheel 2 as seen in a side view. With this feature, to whichever one of the first portion 22a, the second portion 22b and the third portion 22c the fastening member may be retained, it becomes readily possible to avoid the inconvenience of e.g. the rear wheels 2 coming into contact with the fastening member inadvertently.

Moreover, since the retention portion 22 has an inclination, when the fastening member is to be inserted to the retention portion 22, this inserting operation can be carried out not only in the vertical direction, but also in the front/rear direction. Therefore, the operation of causing the fastening member to be retained to the retention portion 22 can be carried out easily.

In case the mower device 10 has a heavy weight or the rear portion of the vehicle body has a light weight, an auxiliary weight 23 may be attached to the counter weight 20, if needed.

The auxiliary weight 23, as shown in Fig. 2, is formed in an L-shape as seen in the side view. In an upper face portion of the auxiliary weight 23, there are defined two through holes (not shown) to which bolts 23a can be inserted. Then, as the bolt holes (not shown) defined in the upper face portion of the counter weight 20 and the through holes of the auxiliary weight 23 are bolt-fastened to each other, the auxiliary weight 23 is fastened to the counter weight 20.

The retention portion 22, as shown in Fig. 1, is arranged to have an area which is not overlapped with the auxiliary weight 23 as seen in the plan view. With this arrangement, even when the auxiliary weight 23 is attached to the counter weight 20, it is still possible to cause the fastening member to be retained to the retention portion 22 on e.g. a load carrying deck of the transporter vehicle.

### [Other Embodiments]

Next, other embodiments having modifications made to the foregoing embodiment will be explained. The following other embodiments may be applied in a plurality of combinations to the foregoing embodiment, unless no contradiction results therefrom. It is understood however that the scope of the present invention is not to be limited to the contents of the respective embodiments.

(1) In the foregoing embodiment, there was explained the example in which the counter weight 20 is attached to the rear side end portion of the vehicle body. However, the present invention is not limited to the foregoing embodiment. For instance, in case the mower device 10 is provided at a rear side portion of the vehicle body, the counter weight 20 may be attached to a more front side portion than the axle 1a of the front wheel 1.
(2) In the foregoing embodiment, there was explained the example in which the retention portions 22 are provided respectively on the left and right lateral side portions of the main body portion 21 in the vehicle body left/right direction. However, the present invention is not limited to the foregoing embodiment. For instance, it is also possible to employ an arrangement of the retention portion 22 being provided to either one of the left and right sides of the main body portion 21. Or, it is also possible to employ an arrangement of the retention portion 22 being provided at a portion of the main body portion 21 other than the vehicle body left/right direction, such as an upper side portion or a lower side portion in the vehicle body vertical direction of the main body portion 21 or a front side portion or a rear side portion in the vehicle body front/rear direction of the main body portion 21.
(3) In the foregoing embodiment, there was explained the example in which the third portion 22c is provided between the left/right side end portion of the first portion 22a and the left/right outer side end portion of the second portion 22b. However, the present invention is not limited to the foregoing embodiment. For instance, it will suffice for the third portion 22c to be disposed to be away from the main body portion 21. For instance, it may be disposed between the left/right center portion of the first portion 22a and the left/right center portion of the second portion 22b.
(4) In the foregoing embodiment, there was explained the example in which the retention portion 22 includes the first portion 22a, the second portion 22b and the third portion 22c and is formed in an approximately U-shape. However, the present invention is not limited to the foregoing embodiment. For instance, the retention portion 22 may be formed in an L-shaped hook type not having the second portion 22b or may be formed in any other shape.
(5) In the foregoing embodiment, there was explained the example in which the retention portion 22 is disposed at a position having a higher ground height than the axle 2a of the rear wheel 2. However, the present invention is not limited to the foregoing embodiment. For instance, in case the mower device 10 is provided at a rear side portion of the vehicle body, the retention portion 22 may be disposed at a position having a higher ground height than the axle 1a of the front wheel 1. Further alternatively, the retention portion 22 may be disposed at a position having a lower ground height than the axle 2a of the rear wheel 2 and the axle 1a of the front wheel 1, as long as such arrangement does not impose any problem in traveling.
(6) In the foregoing embodiment, there was explained the example in which in the retention portion 22, the first portion 22a is disposed with a lower ground height than the second portion 22b. However, the present invention is not limited to the foregoing embodiment. The first portion 22a may be disposed with a higher ground height than the second portion 22b or may be disposed with an equal height thereto.
(7) In the foregoing embodiment, there was explained the example in which the mower device 10 is provided as a utility implement. However, the present invention is not limited to the foregoing embodiment. For instance, as an implement various kinds of implements such as a seedling planter device, a chemical spraying device, etc. may be provided.

### INDUSTRIAL APPLICABILITY

The present invention is applicable not only to a front mount type riding mower, but also to various kinds of work vehicle such as a transporter vehicle, a tractor, a combine, etc. and to a counter weight for such various work vehicles.

### DESCRIPTION OF SIGNS

- 1:: front wheel
- 1a:: axle
- 2:: rear wheel
- 2a:: axle
- 20:: counter weight
- 21:: main body portion
- 22:: retention portion
- 22a:: first portion
- 22b:: second portion
- 22c:: third portion

## Claims

1. A counter weight (20) to be attached to a vehicle body of a work vehicle, wherein the counter weight includes a main body portion (21) to be attached to the vehicle body and a retention portion (22) to which a fastening member is to be retained,
wherein when the main body portion (21) is attached to a front side portion or a rear side portion of the vehicle body, the retention portion (22) is provided on each of left and right sides of the main body portion in a left/right direction of the vehicle body,
**characterized in that** the retention portion (22) on the left and right side respectively includes a first portion (22a) which protrudes laterally from the main body portion, a second portion (22b) which protrudes laterally from the main body portion at a position away from the first portion, and a third portion (22c) provided between the first portion and the second portion and away from the main body portion.

2. The counter weight of claim 1, wherein the first portion (22a) is disposed on farther side from the front/rear center portion of the vehicle body than the second portion (22b) and has a lower ground height than the second portion.

3. A work vehicle comprising:
a vehicle body;
front wheels (1) provided at front portions of the vehicle body;
rear wheels (2) provided at rear portions of the vehicle body; and
a counter weight (20) according to claim 1 or 2,
wherein the main body portion (21) of the counter weight is attached to the vehicle body, to more front side than an axle (1a) of the front wheels or more rear side than an axle (2a) of the rear wheels, and
wherein the retention portion (22) of the counter weight is provided on each of left and right sides of the main body portion (21) in the left/right direction of the vehicle body.

4. The work vehicle of claim 3, wherein the retention portion (22) has a ground height higher than one of the axle (1a) of the front wheels (1) and the axle (2a) of the rear wheels (2) which one axle is closer to the retention portion.

5. The work vehicle of claim 3 or 4, wherein the first portion (22a) is disposed on farther side from the front/rear center portion of the vehicle body than the second portion (22b) and has a lower ground height than the second portion.

6. The work vehicle of any one of claims 3-5, wherein an implement is coupled to either one of a front side portion and a rear side portion of the vehicle body, and the counter weight (20) is attached to the other one thereof.

## Patentansprüche

1. Gegengewicht (20), um an eine Fahrzeugkarosserie eines Arbeitsfahrzeugs angebracht zu werden, wobei das Gegengewicht einen Hauptkörperabschnitt (21) beinhaltet, um an die Fahrzeugkarosserie angebracht zu werden, und einen Rückhalteabschnitt (22), an dem ein Befestigungselement zurückgehalten werden soll,
wobei, wenn der Hauptkörperabschnitt (21) an einen vorderen Seitenabschnitt oder einen hinteren Seitenabschnitt der Fahrzeugkarosserie angebracht ist, der Rückhalteabschnitt (22) auf jeder der linken und rechten Seite des Hauptkörperabschnitts in einer Links-/Rechtsrichtung der Fahrzeugkaroserie bereitgestellt ist,
**dadurch gekennzeichnet, dass** der Rückhalteabschnitt (22) auf der linken bzw. rechten Seite einen ersten Abschnitt (22a) beinhaltet, der seitlich vom Hauptkörperabschnitt vorspringt, und einen zweiten Abschnitt (22b), der seitlich vom Hauptkörperabschnitt vorspringt, an einer Position weg vom ersten Abschnitt, und einen dritten Abschnitt (22c), der zwischen dem ersten Abschnitt und dem zweiten Abschnitt und weg vom Hauptkörperabschnitt bereitgestellt ist.

2. Gegengewicht nach Anspruch 1, wobei der erste Abschnitt (22a) auf der weiter entfernten Seite vom vorderen/hinteren Mittelabschnitt der Fahrzeugkarosserie als der zweite Abschnitt (22b) angeordnet ist und eine niedrigere Bodenhöhe als der zweite Abschnitt aufweist.

3. Arbeitsfahrzeug, umfassend:
eine Fahrzeugkarosserie;
Vorderräder (1), die an vorderen Abschnitten der Fahrzeugkarosserie bereitgestellt sind;
Hinterräder (2), die an hinteren Abschnitten der Fahrzeugkarosserie bereitgestellt sind; und
ein Gegengewicht (20) nach Anspruch 1 oder 2,
wobei der Hauptkörperabschnitt (21) des Gegengewichts an die Fahrzeugkarosserie angebracht ist, weiter an der vorderen Seite als eine Achse (1a) der Vorderräder oder weiter an der hinteren Seite (2a) der Hinterräder, und
wobei der Rückhalteabschnitt (22) des Gegengewichts auf jeder der linken und rechten Seite des Hauptkörperabschnitts (21) in der Links-/Rechtsrichtung des Fahrzeugkörpers bereitgestellt ist.

4. Arbeitsfahrzeug nach Anspruch 3, wobei der Rückhalteabschnitt (22) eine Bodenhöhe aufweist, die höher als eine der Achse (1a) der Vorderräder (1) und der Achse (2a) der Hinterräder (2) ist, je nachdem, welche Achse näher am Rückhalteabschnitt ist.

5. Arbeitsfahrzeug nach Anspruch 3 oder 4, wobei der erste Abschnitt (22a) auf der weiter entfernten Seite vom vorderen/hinteren Mittelabschnitt der Fahrzeugkarosserie als der zweite Abschnitt (22b) angeordnet ist und eine niedrigere Bodenhöhe als der zweite Abschnitt aufweist.

6. Arbeitsfahrzeug nach einem der Ansprüche 3-5, wobei ein Arbeitsgerät an einen eines vorderen Seitenabschnitts und eines hinteren Seitenabschnitts der Fahrzeugkarosserie gekoppelt ist, und das Gegengewicht (20) an den anderen davon angebracht ist.

## Revendications

1. Contrepoids (20) destiné à être fixé à un corps de véhicule d'un véhicule de travail, le contrepoids comprenant une partie de corps principal (21) destinée à être fixée au corps de véhicule et une partie de retenue (22) sur laquelle un élément de fixation doit être retenu,
dans lequel lorsque la partie de corps principal (21) est fixée à une partie latérale avant ou une partie latérale arrière du corps de véhicule, la partie de retenue (22) est prévue sur chacun des côtés gauche et droit de la partie de corps principal dans une direction gauche/droite du corps de véhicule,
**caractérisé en ce que** la partie de retenue (22), respectivement sur les côtés gauche et droit, comprend une première partie (22a) qui fait saillie latéralement de la partie de corps principal, une deuxième partie (22b) qui fait saillie latéralement de la partie de corps principal dans une position à l'opposé de la première partie, et une troisième partie (22c) prévue entre la première partie et la deuxième partie et à l'opposé de la partie de corps principal.

2. Contrepoids selon la revendication 1, dans lequel la première partie (22a) est disposée sur le côté plus éloigné de la partie centrale avant/arrière du corps de véhicule que la deuxième partie (22b) et a une hauteur par rapport au sol inférieure à la deuxième partie.

3. Véhicule de travail comprenant :
un corps de véhicule ;
des roues avant (1) prévues au niveau des parties avant du corps de véhicule ;
des roues arrière (2) prévues au niveau des parties arrière du corps de véhicule ; et
un contrepoids (20) selon la revendication 1 ou 2,
dans lequel la partie de corps principal (21) du contrepoids est fixée sur le corps de véhicule, plus du côté avant qu'un essieu (1a) des roues avant ou plus du côté arrière qu'un essieu (2a) des roues arrière, et
dans lequel la partie de retenue (22) du contrepoids est prévue sur chacun des côtés gauche et droit de la partie de corps principal (21) dans la direction gauche/droite du corps de véhicule.

4. Véhicule de travail selon la revendication 3, dans lequel la partie de retenue (22) a une hauteur par rapport au sol supérieure à l'un parmi l'essieu (1a) des roues avant (1) et l'essieu (2a) des roues arrière (2), lequel essieu est plus proche de la partie de retenue.

5. Véhicule de travail selon la revendication 3 ou 4, dans lequel la première partie (22a) est disposée sur un côté plus éloigné de la partie centrale avant/arrière du corps de véhicule que la deuxième partie (22b) et a une hauteur par rapport au sol inférieure à la deuxième partie.

6. Véhicule de travail selon l'une quelconque des revendications 3 à 5, dans lequel un accessoire est couplé à l'une parmi une partie latérale avant et une partie latérale arrière du corps de véhicule et le contrepoids (20) est fixé à son autre partie.
